# EUROPÄISCHE PATENTSCHRIFT

(11) **EP 3 352 531 B1**
(45) Veröffentlichungstag und Bekanntmachung des Hinweises auf die Patenterteilung: **14.08.2019**
(21) Anmeldenummer: 17204556.9
(22) Anmeldetag: 30.11.2017
(51) Int. Cl.: H05B 33/08, H05B 37/02

(54) **BEWEGUNGS- UND/ODER ANWESENHEITSSENSORVORRICHTUNG UMFASSEND EINEN STECKER SOWIE SYSTEM**
MOVEMENT AND/OR PRESENCE SENSOR DEVICE COMPRISING A CONNECTOR AND SYSTEM
DISPOSITIF CAPTEUR DE MOUVEMENT ET/OU DE PRÉSENCE COMPORTANT UNE FICHE AINSI QUE SYSTÈME

(30) Priorität: 20.01.2017 DE 202017100291 U
(43) Veröffentlichungstag der Anmeldung: 25.07.2018
(73) Patentinhaber: STEINEL GmbH, 33442 Herzebrock (DE)
(72) Erfinder: MÖLLER, Thomas, 32049 Herford (DE)
(74) Vertreter: Müller Hoffmann & Partner

(56) Entgegenhaltungen:
- DE-A1-102009 017 213
- US-A- 5 015 994
- US-A1- 2008 204 258
- US-A1- 2012 112 666

## Beschreibung

Die vorliegende Erfindung betrifft eine Bewegungs- und/oder Anwesenheitssensorvorrichtung, insbesondere ausgebildet für eine Verwendung an einer Wand, zur signalleitenden Anbindung mit einem Kommunikationspartner und/oder einer Steuereinheit. Ferner betrifft die Erfindung ein System umfassend eine erfindungsgemäße Bewegungs- und/oder Anwesenheitssensorvorrichtung, einen, bevorzugt mittels einem Kommunikationspartner und/oder einer Steuereinheit ansteuerbaren, Verbraucher sowie eine zur elektrischen Kontaktierung und mechanischen Halterung ausgebildete Haushalts- und/oder Industriesteckdose.

Aus dem Stand der Technik sind in Form von gängigen und marktüblichen Sensorvorrichtungen Bewegungssensorvorrichtungen zur berührungslosen Steuerung von Verbrauchern allgemein bekannt. Besonders häufig werden Bewegungssensorvorrichtungen für eine berührungslose Beleuchtungssteuerung im Innen- und Außenbereich eingesetzt. Dabei wird ein elektrischer Schalter in einen bestehenden Stromkreis der Leuchte integriert und mittels der Bewegungssensorvorrichtung derart angesteuert, dass die Leuchte bei erfassten Bewegungen eingeschaltet wird. Im Innenbereich kann auf diese Art die Beleuchtung etwa von kleinen Hausfluren oder Durchgangszimmern komfortabel gelöst werden. Bei der Ausleuchtung eines Hauszugangs und/oder einer Garagenzufahrt im Außenbereich erfolgt durch die Bewegungssensorvorrichtung neben dem Komfortgewinn auch eine Abschreckung Unbefugter.

Aus der D1 (DE 10 2009 017 213 A1) ist ein Leuchtmittel umfassendes Notlicht bekannt, das einen Sensorsignalwandler für eine Bewegungs- und/oder Anwesenheitsüberwachung in einem vor einer Sensoraustrittsfläche liegenden Erfassungsbereich umfasst, um beim Ausfall eines Hauptstromkreises mittels eines verlegten Hilfsstromkreises eine bewegungsbasierte Beleuchtung zu Realisieren. Hierfür muss das den Sensorsignalwandler umfassende Notlicht in eine Elektroinstallationsdose fachmännisch installiert werden.

Die D2 (US 5 015 994 A) offenbart ein Leuchtmittel umfassendes Sicherheitslicht mit einem Sensorsignalwandler für eine Bewegungs- und/oder Anwesenheitserfassung zur Ansteuerung der Leuchtmittel. Das Sicherheitslicht ist in einem einen Steckerabschnitt umfassenden Gehäuse angeordnet.

Aus der D3 (US 2012/112666 A1) ist ein System für eine sensorbasierte Lichtsteuerung zur Beleuchtung eines Außenbereichs bekannt. Hierfür ist ein Sensorsignalwandler umfassendes und in einem separaten Gehäuse vorgesehenes Modul über Kommunikationsmittel mit einer einen Steckerabschnitt umfassenden Steuereinheit gekoppelt.

Die D4 (US 2008/0204258 A1) offenbart ein System mit einem Bewegungssensor und einem Lichtsensor. Elektrische Kommunikationsmitteln und Logikmitteln für Datenaustausch sind vorhanden, sowie einen Steckerabschnitt im Gehäuse.

Auch im Zuge von sog. Smart-Home-Anwendungen mit intelligenten, also untereinander vernetzten Verbrauchern eignen sich gattungsbildende Bewegungssensorvorrichtungen für die berührungslose Steuerung von Verbrauchern. Hier werden die Bewegungssensorvorrichtungen meist nicht direkt in einen bestehenden Stromkreis integriert, sondern steuern durch eine Kommunikationsverbindung indirekt einen über einen Kommunikationspartner und/oder eine Verwaltungseinheit angebundenen Verbraucher. Da bei aus dem Stand der Technik bekannten gattungsbildenden Systemen üblicherweise eine gute Nachrüstbarkeit und eine einfache Montage im Vordergrund stehen, werden die Systeme oft über Batterien mit elektrischer Energie versorgt. Neben einer guten Nachrüstbarkeit, ohne anfallende Kosten für eine Beauftragung eines Fachmanns für Eingriffe in eine bestehende Elektrohausinstallation, ermöglicht das batteriebasierte System auf Grund seiner Mobilität eine freie Positionierung und Ausrichtung auf einen gewünschten Erfassungsbereich. Nachteilig bei den bekannten Lösungen bleibt ein Restmontageaufwand für die Anbringung der Bewegungs- und/oder Anwesenheitssensorvorrichtung durch Bohrungen oder Klebeverbindungen, wodurch bleibende Schäden nach Entfernung der Sensorvorrichtung durch Bohrlöcher oder Klebereste unvermeidbar sind. Hinzu kommt der Wartungsaufwand für das regelmäßige Austauschen der Batterien und die teils schlechte optische Integration der Bewegungssensorvorrichtungen in bestehende Wohnkonzepte. Ferner ist auch die Umweltbelastung bei Nutzung von Einwegbatterien nachteilig.

Ausgehend von dem vorgenannten Stand der Technik liegt der Erfindung die Aufgabe zugrunde eine, vorzugsweise für die Wandmontage geeignete, Bewegungs- und/oder Anwesenheitssensorvorrichtung anzugeben, die einen hohen Benutzerkomfort aufweist, was sich neben einer werkzeugfreien Montage auch durch einen möglichst wartungsfreien Betrieb zeigen soll. Gleichzeitig ist es bevorzugt, wenn die Bewegungs- und/oder Anwesenheitssensorvorrichtung über Zusatzfunktionen, bevorzugt in Form eines frei programmierbaren mechanischen Tasters und/oder einem Leuchtmittel, verfügt und sich optisch gut in Wohnraumkonzepte integrieren lässt.

Diese Aufgabe wird mit der Bewegungs- und/oder Anwesenheitssensorvorrichtung mit den Merkmalen des Anspruch 1 gelöst. Vorteilhafte Weiterbildungen der Erfindung sind in den Unteransprüchen angegeben. Ferner wird Schutz im Rahmen der Erfindung beansprucht für ein System aufweisend eine derartige Bewegungs- und/oder Anwesenheitssensorvorrichtung in Verbindung mit einem, bevorzugt mittels einem Kommunikationspartner und/oder einer Steuereinheit angesteuerten, Verbraucher sowie einer für die elektrische Kontaktierung und mechanische Halterung der Bewegungs- und/oder Anwesenheitssensorvorrichtung ausgebildete Haushalts- und/oder Industriesteckdose.

In erfindungsgemäß vorteilhafter Weise überwindet die erfindungsgemäße Bewegungs- und/oder Anwesenheitssensorvorrichtung die aus dem Stand der Technik geschilderten Nachteile zunächst dadurch, dass in einem Gehäuse ein Sensorsignalwandler angeordnet ist zum Senden und Empfangen von Sensorsignalen, bevorzugt Infrarot-Wellen oder Elektromagnetischen Wellen, für eine Bewegungs- und/oder Anwesenheitserfassung in einem vor einer Sensoraustrittsfläche gebildeten Erfassungsbereich. Dem Sensorsignalwandler sind signalleitend verbundene Logikmittel zugeordnet, die für ein Auswerten und Verarbeiten der Sensorsignale ausgebildet sind. Ferner sind den Logikmitteln elektrische Kommunikationsmittel signalleitend zugeordnet für den Datenaustausch mit einem Kommunikationspartner und/oder einer Steuereinheit. Zum Versorgen der elektrischen Komponenten mit entsprechenden Versorgungsspannung sind im Gehäuse Energieversorgungsmittel vorgesehen, die erfindungsgemäß und vorteilhaft über einen unmittelbar am Gehäuse, bevorzugt an der Gehäuserückseite, angeordneten Steckerabschnitt Energie aus einer Haushalts- und/oder Industriesteckdose, insbesondere ausgebildet als Schutzkontakt-Steckdose (SchuKo), von einem, bevorzugt öffentlichen, Netzanschluss beziehen. Neben der energetischen Versorgung der erfindungsgemäßen Bewegungs- und/oder Anwesenheitssensorvorrichtung erfolgt durch den eingesteckten Betriebszustand auch eine vorteilhafte Festlegung und Ausrichtung der Bewegungs- und/oder Anwesenheitssensorvorrichtung auf den Erfassungsbereich, der vor der Sensoraustrittsfläche liegt und durch die Sensorsignale überwacht wird. Ferner bildet die Sensoraustrittsfläche einen zumindest abschnittsweise planaren Flächenabschnitt aus. Durch die erfindungsgemäße Anordnung eines Steckers am Gehäuse, insbesondere an der Rückseite eines Gehäuses, und die daraus ermöglichte vorteilhafte Versorgung der Komponenten der Bewegungssensorvorrichtung mit elektrischer Energie über die Energieversorgungsmittel, werden die vom Stand der Technik bekannten Nachteile von gattungsbildenden Systeme dahingehend verbessert, dass eine auf Bohrungen oder Klebeverbindungen basierende Montage vollständig entfällt. Erfindungsgemäß wird lediglich die Bewegungs- und/oder Anwesenheitssensorvorrichtung in eine standardisierte Steckdose eingesteckt und über erfindungsgemäß vorgesehene Kommunikationsmittel ein Datenverbindung mit einem Kommunikationspartner und/oder einer Steuereinheit aufgebaut zur Ansteuerung einer, insbesonders mehrerer, Lasten auf Basis von erfassten Bewegungen. Durch den erfindungsgemäß vorgesehenen Bezug von elektrischer Energie aus dem Netzanschluss entfällt zudem der beim Stand der Technik für einen langfristigen Betrieb erforderliche Batteriewechsel vollständig, wodurch das System wartungsfrei wird. Durch diese erfindungsgemäße, vorteilhafte Maßnahme erreicht die Bewegungssensorvorrichtung zusätzlich eine höhere Zuverlässigkeit, da ein Ausfall des Systems aufgrund von entladenen Batterien ausgeschlossen werden kann. Da niedrige Temperaturen bei Batterien und Akkumulatoren zu hohen Leistungseinbußen führen, fällt die erfindungsgemäße Bewegungs- und/oder Anwesenheitssensorvorrichtung auch gegenüber äußeren Einflüssen robuster aus. Ferner kann vorteilhaft die Umweltbilanz der erfindungsgemäßen Bewegungs- und/oder Anwesenheitssensorvorrichtung verbessert werden, da für den Betrieb keine Batterien verbraucht werden.

In einer bevorzugten Ausführungsform der Erfindung erfolgt eine vorteilhafte Anbindung der Bewegungs- und/oder Anwesenheitssensorvorrichtung zu dem Kommunikationspartner und/oder der Steuereinheit mittels der Kommunikationsmittel über Funktechnik, die, bevorzugt auf Basis von standardisierten Funkprotokollen arbeiten und weiter bevorzugt Frequenzbereiche zwischen 800MHz bis 1GHz abdecken. Dies ermöglicht eine vorteilhafte Kopplung und/oder Vernetzung des Kommunikationspartners und/oder der Steuereinheit ohne Eingriff in eine bestehende Hausinstallation. Außerdem unterstützt dies vorteilhaft den erfindungsgemäßen Gedanken eines möglichst geringen Montageaufwands, da durch den drahtlosen Datenaustausch über Funkprotokolle keine Steuerleitungen zu dem Kommunikationspartner und/oder der Steuereinheit verlegt werden müssen. Neben einer guten und einfachen Anpassung der über die erfindungsgemäße Bewegungs- und/oder Anwesenheitssensorvorrichtung gesteuerten Vorgänge, gewährleisteten die Funkprotokolle gleichzeitig eine vorteilhaft hohe Zuverlässigkeit, da auch dicke Wände von den Funkwellen durchdrungen werden.

Ferner ist in einer erfindungsgemäßen Ausführungsform vorgesehen, dass im eingesteckten Betriebszustand die von dem Sensorsignalwandler ausgehenden Sensorsignale vor der Sensoraustrittsfläche vorteilhaft auf einen Erfassungsbereich ausgerichtet werden und die Sensoraustrittsfläche durch eine Baugruppe des Gehäuses definiert wird, die insbesondere als flächige Linsenbaugruppe für Infrarotsensorsignale ausgestaltet ist. Dabei wird die Grenze des seitlichen in einer Horizontalebene verlaufenden Erfassungsbereichs über einen Azimutwinkel A auf 160 Grad, bevorzugt 120 Grad konstruktiv festgelegt, wobei die Horizontalebene durch die beiden Stiftkontakte des Steckerabschnitts aufgespannt wird. Die äußeren Grenzen des Erfassungsbereichs in einer senkrecht zur Horizontalebene angeordneten Vertikalebene sind zur Horizontalebene unsymmetrisch, wobei beide Bereichsgrenzen in der Sensoraustrittsfläche zueinander in Elevationswinkel E kleiner 160 Grad, bevorzugt kleiner 140 Grad, weiter bevorzugt kleiner 100 Grad angeordnet sind. Dies erlaubt vorteilhaft trotz der festen Ausrichtung der erfindungsgemäßen Bewegungs- und/oder Anwesenheitssensorvorrichtung im eingesteckten Betriebszustand den Erfassungsbereich durch die beiden Einsteckvarianten zu beeinflussen (ermöglicht durch ein 180-Grad-Verdrehen der Bewegungs- und/oder Anwesenheitssensorvorrichtung vor dem Einstecken in der Steckdose). Vorteilhaft lassen sich dabei bodennahe Bewegungen in einer der beiden Einsteckpositionen aus dem Erfassungsbereich ausgrenzen, wodurch sich Fehldetektionen durch Tiere, insbesondere Hauskatzen und/oder Hunde, vermeiden lassen (keine Kleintierüberwachung). Gleichzeitig werden in der zweiten Einsteckposition, bei der bodennahe Bewegungen im Erfassungsbereich angeordnet sind, deckennahe Bewegungen, bevorzugt durch im Wind wiegende Äste einer von der Sonne erwärmten Pflanze und/oder durch, bevorzugt an einem Dachfenster, vorbeifliegende Vögel, vermieden. Weiterbildend ist dabei auch vorgesehen, dass auf der Oberfläche des Gehäuses, bevorzugt unmittelbar auf der Außenseite der flächigen Linsenbaugruppe, über ein, bevorzugt zwei Winkel- oder Strichsymbole umfassendes, Kennzeichen der Erfassungsbereich durch die Darstellung der äußeren Abstrahlwinkel der Sensorsignale skizziert ist. Dabei ist es besonders bevorzugt, wenn zwei Strichsymbole winklig zueinander angeordnet sind und einer der beiden Strichsymbole parallel zur Horizontalachse angeordnet ist zur Darstellung des begrenzten Erfassungsbereichs.

Besonders bevorzugt ist, wenn die Bewegungs- und/oder Anwesenheitssensorvorrichtung derart ausgebildet ist, dass ein von den Logikmitteln ansteuerbares Leuchtmittel, bevorzugt gebildet aus mindestens einer Lichtdiode (LED), im Gehäuse angeordnet ist. Ferner ist bevorzugt vorgesehen, dass von den Leuchtmitteln emittierte sichtbare Lichtstrahlen durch eine, zur Sensoraustrittsfläche benachbart und/oder parallel angeordneten, Fläche austreten können. Dies ermöglicht vorteilhaft, dass durch die Bewegungs- und/oder Anwesenheitssensorvorrichtung nicht nur Bewegungen und/oder die Anwesenheit in dem Erfassungsbereich überwacht wird, sondern gleichzeig auch eine Lichtquelle bereitgestellt wird für eine vorteilhafte Ausleuchtung der Umgebung und/oder für eine vorteilhafte Orientierung, insbesondere in einer Halle und/oder einem großen Raum. Weiterbildend ist auch vorgesehen, dass die Logikmittel zur vorteilhaften Ansteuerung der mindestens einen Lichtdiode (LED) ausgebildet sind und dass das Steuersignal mittels der Kommunikationsmittel von dem Kommunikationspartner und/oder der Steuereinheit ausgeht oder anderweitig direkt in den Logikmitteln erzeugt wird.

Eine weiter bevorzugte Ausführungsform der Erfindung sieht vor, die erfindungsgemäße Bewegungs- und/oder Anwesenheitssensorvorrichtung um signalleitend mit den Logikmitteln verbundene Lichterfassungsmittel, bevorzugt ausgebildet durch eine Photodiode, zu erweitern, um eine Dämmerungsschalterfunktionalität zu erreichen. Weiterbildend wird dabei die Helligkeit in der unmittelbaren Umgebung der erfindungsgemäßen Bewegungs- und/oder Anwesenheitssensorvorrichtung erfasst, wobei der Lichtbeitrag der eigenen Lichtquelle dabei kompensiert wird. Die erfasste Lichtstärke wird durch die Logikmittel weiterverarbeitet, um vorteilhaft zur direkten Steuerung von Funktionalitäten der erfindungsgemäßen Bewegungs- und/oder Anwesenheitssensorvorrichtung genutzt zu werden. Alternativ kann die erfasste Lichtstärke auch an den Kommunikationspartner und/oder die Steuereinheit übermittelt werden, um dort anderweitig verarbeitet zu werden. Dabei ist besonders bevorzugt, wenn das Ansteuerverhalten von den erfassten Lichtverhältnissen abhängt, was vorteilhaft zu Energie- und Kosteneinsparungen führen kann.

Eine besonders bevorzugte Realisierungsform sieht vor, dass den Logikmitteln ein signalleitend verbundener und manuell betätigbarer Schalter oder Taster zugeordnet ist, der insbesondere zur Sensoraustrittsfläche benachbart und/oder hinter einer dazu parallel angeordneten Fläche angeordnet ist, wobei insbesondere eine flächige Tast- oder Schaltfläche angeboten wird für eine manuelle Betätigung durch eine Bedienperson. Dabei ist bevorzugt vorgesehen, dass die erfindungsgemäße Bewegungs- und/oder Anwesenheitssensorvorrichtung von einem durch das Betätigen des Tasters oder Schalters erzeugten Signal gesteuert und/oder beeinflusst wird. Bevorzugt ist dabei eine Taster- bzw. Schalter gesteuerte Aktivierung und/oder eine Deaktivierung der Bewegungserfassung möglich und/oder eine Steuerung des bevorzugt in der Bewegungs- und/oder Anwesenheitssensorvorrichtung angeordneten Leuchtmittels und/oder der Funktionalität des Kommunikationspartners und/oder der Steuereinheit. Für die Steuerung von mehreren Funktionen über den Schalter oder Taster ist eine, bevorzugt frei programmierbare, Codierung vorgesehen, bei der bevorzugt Doppelimpulse und/oder Dreifachimpulse vorteilhaft erkannt und von den Logikmitteln entsprechend unterschiedlich und insbesondere auch für besondere Betriebszustände, etwa Dauer- oder Blicklicht der Lichtquelle oder eine Deaktivierung der Bewegungserfassung weiterverarbeitet werden können.

Eine weiter bevorzugte Ausführungsform der Erfindung sieht eine Fertigung des Gehäuses aus Kunststoffspritzguss vor, wobei das Gehäuse bevorzugt eine planare oder gebogene Außenfläche aufweist. Dabei ist es weiter bevorzugt, wenn eine, insbesondere optisch abgegrenzte, Teilfläche der Außenfläche die Sensoraußenfläche bildet und eine weitere, insbesondere optisch abgegrenzte, Teilfläche eine Abdeckelement für dahinter angeordnete Leuchtmittel bildet und/oder eine weitere, insbesondere optisch abgegrenzte Teilfläche, eine Betätigungsfläche für einen mechanischen Schalter oder Taster bildet, wobei bevorzugt das Gehäuse der erfindungsgemäßen Bewegungs- und/oder Anwesenheitssensorvorrichtung eine viereckige Kontur besitzt, die weiter bevorzugt einem benachbart angeordneten Lichtschalter konturgleich, insbesondere geometrisch ähnlich, ist. Eine bevorzugt konturgleiche Ausgestaltung der erfindungsgemäßen Bewegungs- und/oder Anwesenheitssensorvorrichtung führt dabei vorteilhaft zu einer optisch ansprechenden Formgebung der Bewegungs- und/oder Anwesenheitssensorvorrichtung. Weiterbildend ist dabei eine Ausführungsform der erfindungsgemäßen Bewegungs- und/oder Anwesenheitssensorvorrichtung ganz besonders bevorzugt, bei der die Gehäusekontur der Formgebung des unmittelbar über der Steckdose angeordneten Lichtschalters entspricht, oder ähnlich ist, was vorteilhaft eine unauffällige und ansprechende Integration der Bewegungs- und/oder Anwesenheitssensorvorrichtung ermöglicht.

Während im Rahmen der vorliegenden Erfindung prinzipiell Schutz für die erfindungsgemäße Bewegungs- und/oder Anwesenheitssensorvorrichtung beansprucht wird, also unabhängig von einem mittels des erfindungsgemäß vorgesehenen Kommunikationspartners und/oder der Steuereinheit angesteuerten Verbraucher, ist gleichwohl die erfindungsgemäße Wirkung in einem System bestehend aus einem konkret vorliegenden elektrischen Verbraucher besonders sichtbar, wobei dieser in der Art üblicher elektrischer Verbraucher, insbesondere durch ein externes Leuchtmittel, eine Rollladensteuerung, ein Heizungsventil oder eine Jalousie gebildet wird, und einer Haushalts- und/oder Industriestreckdose, die das erfindungsgemäß vorgesehene elektrische Kontaktieren sowie mechanische Halten der Bewegungs- und/oder Anwesenheitssensorvorrichtung ermöglicht.

Der Schutz der vorliegenden Erfindung ist jedoch nicht auf diese Art von Systemen beschränkt, vielmehr ist es insbesondere auch vorgesehen und von der vorliegenden Erfindung umfasst, den/die erfindungsgemäß vorgesehene/n Kommunikationspartner und/oder der Steuereinheit selbst zur partnerseitigen Ansteuerung von Verbrauchern auszubilden, wobei der partnerseitig gekoppelte Verbraucher durch die Bewegungs- und/oder Anwesenheitssensorvorrichtung mittels des Kommunikationspartners und/oder der Steuereinheit ansteuerbar ist.

Weiterbildend ist dabei im Rahmen des Systemanspruchs auch vorgesehen, dass der vorteilhaft drahtlos angebundene Kommunikationspartner und/oder die Steuereinheit, bevorzugt mobil abrufbare, Daten bereitstellt, die bevorzugt über Displaymittel zur Darstellung von Betriebszustandsinformationen und/oder zur Eingabe von Steuerbefehlen verarbeitbar sind, wobei es besonders bevorzugt ist, wenn sich hierfür gängige Anwendungsprogramme auf üblichen stationären oder tragbaren Datenverarbeitungsvorrichtungen beziehen und einrichten lassen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: ein Blockdiagramm einer ersten bevorzugten Ausführungsform einer erfindungsgemäßen Bewegungs- und/oder Anwesenheitssensorvorrichtung,
- Fig. 2:: eine perspektivische Abbildung der Bewegungs- und/oder Anwesenheitssensorvorrichtung nach Fig. 1 in einem eingesteckten Betriebszustand in einer, unmittelbar unter einem Lichtschalter angeordneten Haushaltssteckdose,
- Fig. 3:: eine Frontansicht des Ausführungsbeispiels nach Fig. 1 der erfindungsgemäße Bewegungs- und/oder Anwesenheitssensorvorrichtung,
- Fig. 4:: eine Rückansicht der bevorzugten Ausführungsform nach Fig. 1 der erfindungsgemäßen Bewegungs- und/oder Anwesenheitssensorvorrichtung.

In den Figuren sind funktionsgleiche oder einander ähnelnde Elemente und Baugruppen mit den gleichen Bezugszeichen gekennzeichnet.

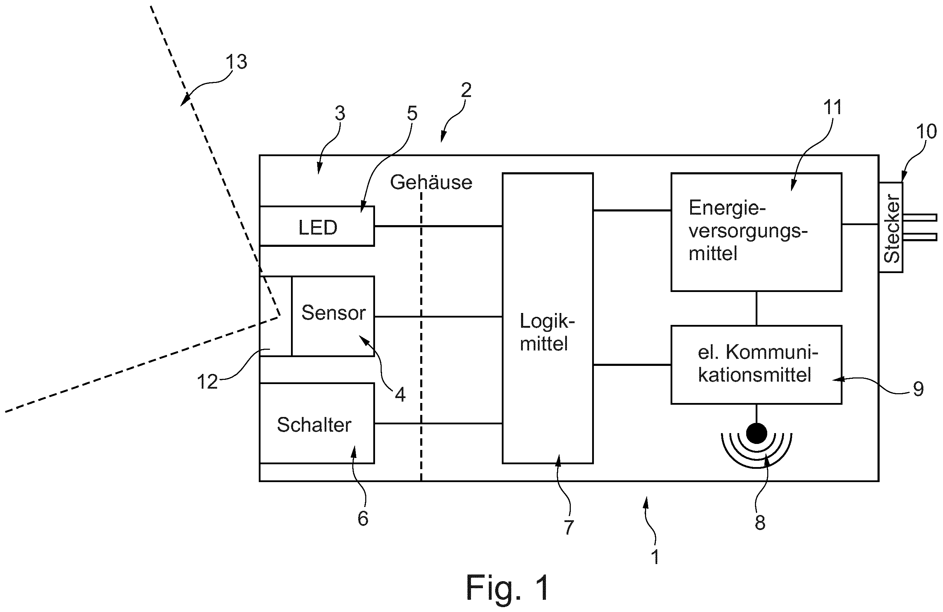

Die Fig. 1 zeigt ein Blockdiagramm einer bevorzugten Ausführungsform der erfindungsgemäßen einen Erfassungsbereich 13 für die Bewegungs- und/oder Anwesenheitsüberwachung aufweisende Bewegungs- und/oder Anwesenheitssensorvorrichtung 1. In dem Blockdiagramm sind wesentliche Funktionseinheiten schematisch dargestellt. Zu erkennen sind ein Leuchtmittel 5, ein Sensorsignalwandler 4 zum Senden und Empfangen von Sensorsignalen für eine Bewegungs- und/oder Anwesenheitserfassung und ein mechanisch betätigbarer Schalter 6, die in einem gemeinsamen eine Frontfläche 3 aufweisenden Gehäuse 2 angeordnet sind. Die Funktionseinheiten sind zur Ansteuerung und Auswertung signalleitend mit Logikmitteln 7 verbunden, indem diese auf einer gemeinsamen Leiterplatte angeordnet sind. Auch mit den Logikmitteln 7 signalleitend verbunden sind eine Funkantenne 8 umfassende elektrische Kommunikationsmittel 9 vorgesehen, die über gängige Funkprotokolle Daten mit einem nicht in Fig. 1 dargestellten Kommunikationspartner und/oder einer Steuereinheit austauschen können. Die Versorgung der aus elektrischen Baugruppen gebildeten Funktionseinheiten mit einer entsprechenden Gleichspannungsversorgungsspannung wird über einen Netzstecker 10 umfassende Energieversorgungsmittel 11 sichergestellt. Dies ermöglicht in einem eingesteckten Betriebszustand in einer in Fig. 1 nicht grafisch dargestellten Haushalts- und/oder Industriesteckdose 15 die Versorgung der Energieversorgungsmittel 11 durch eine Netzspannung.

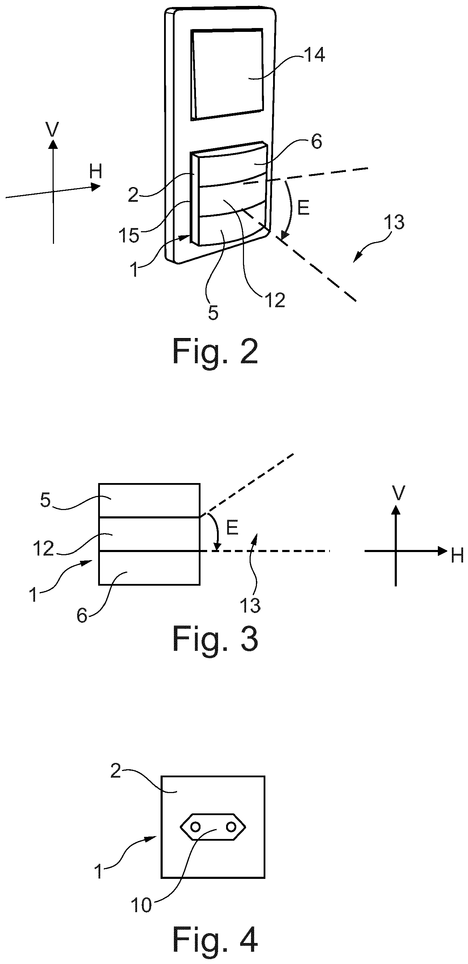

Fig. 2 zeigt die aus Fig. 1 bekannte Ausführungsform der Bewegungs- und/oder Anwesenheitssensorvorrichtung 1 in dem eingesteckten Betriebszustand in einer Haushaltssteckdose 15, die als gängige Kombination aus Steckdose 15 und Lichtschalter 14 ausgebildet ist. Die in der Abbildung sichtbare Frontfläche 3 des Gehäuses 2 der Bewegungs- und/oder Anwesenheitserkennungsvorrichtung 1 besteht aus drei gebogenen Abdeckelementen für die dahinter angeordneten Funktionseinheiten. Das oberste Abdeckelement, das sich optisch von den darunter angeordneten Abdeckelementen unterscheidet, ist als manuell betätigbare Tastfläche für den unmittelbar dahinter angeordneten Schalter 6 ausgebildet. Für eine haptische Rückkopplung beim Betätigen des Schalters 6 ist die Tastfläche entgegen einer Rückstellfeder bis zu einem definierten Anschlagpunkt bewegbar gelagert. Das benachbarte Abdeckelement, das in der dargestellten Ausführungsform aus PIRdurchlässigem (PIR = passive infrared) Material aufgebaut ist, verdeckt die darunter angeordnete flächige Linsenbaugruppe zur Streuung der vom Sensorsignalwandler 4 ausgehenden infraroten Sensorsignale und bildet somit die Sensoraustrittsfläche 12. Darunter grenzt ein weiteres, für Lichtstrahlen durchlässiges Abdeckelement unmittelbar an, hinter dem die Leuchtmittel 5 angeordnet sind. Ferner bilden die fluchtend aneinander grenzenden Abdeckelemente eine gemeinsame Oberfläche der Bewegungs- und/oder Anwesenheitssensorvorrichtung 1.

Fig. 3 zeigt die aus Fig. 1 und Fig. 2 bekannte Bewegungs- und/oder Anwesenheitssensorvorrichtung 1 in einem zweiten, zu Fig. 2 um 180 Grad verdrehten Betriebszustand. Das hat zur Folge, dass das Abdeckelement des mechanisch betätigbaren Schalters 6 nun zu unterst und das Abdeckelement des Leuchtmittels 5 zu oberst angeordnet ist. Erfindungsgemäß führt diese Ausrichtung zu einer Kleintierunterdrückung oder einer vergleichbaren Beschränkung des Erfassungsbereichs 13, da der Elevationswinkel E des Erfassungsbereichs 13 des Sensorsignalwandlers 4 unsymmetrisch zu einer Horizontalebene H ist, die über die beiden Kontaktstifte des Steckerabschnitts 10 zur Kontaktierung mit der Haushalts- und/oder Industriesteckdose 15 aufgespannt wird.

Fig. 4 zeigt die Rückansicht der Bewegungs- und/oder Anwesenheitssensorvorrichtung 1 nach Fig. 1 bis Fig. 3. Neben dem Gehäuse 2 ist der unmittelbar daran angeordnete Steckerabschnitt 10 mit den beiden Kontaktstiften zum Einführen in die Kontaktöffnung der Haushalts- und/oder Industriesteckdose 15 dargestellt. Durch Einstecken der Bewegungs- und/oder Anwesenheitssensorvorrichtung 1 in die Haushalts- und/oder Industriesteckdose 15 erfolgt nicht nur die elektrische Versorgung der Funktionseinheiten über die Netzspannung mit Energie, sondern gleichzeitig auch eine mechanische Festlegung der Bewegungs- und/oder Anwesenheitssensorvorrichtung 1 sowie eine Ausrichtung des Erfassungsbereichs 13 für die Bewegungs- und/oder Anwesenheitsüberwachung.

Im Gebrauch hat die Bedienperson zunächst die Wahl, über die Ausrichtung der Bewegungs- und/oder Anwesenheitssensorvorrichtung 1 beim Einführen in die Haushalts- und/oder Industriesteckdose 15 den Erfassungsbereich 13 für die Bewegungs- und/oder Anwesenheitserfassung zu bestimmen. Daher wird diese, in Abhängigkeit ob eine Kleintierunterdrückung oder vergleichbare Winkelbestimmung erwünscht ist oder nicht, die Bewegungs- und/oder Anwesenheitssensorvorrichtung 1 entsprechend in die Haushalts- und/oder Industriesteckdose 15 einführen. Aussage über die gewünschte Ausrichtung liefert dabei ein, hier aus zwei asymmetrisch zueinander angeordneten Strichen gebildetes Kennzeichen. Nach Einführen der Bewegungs- und/oder Anwesenheitssensorvorrichtung 1 in die Haushalts- und/oder Industriesteckdose 15 versorgen sich die Energieversorgungsmittel 11 über die Netzspannung mit elektrischer Energie, um die Funktionseinheiten mit geeigneten Gleichspannungsversorgungsspannungen zu versorgen. Dies hat zur Folge, dass die Kommunikationsmittel 9 selbstständig einen Suchvorgang starten, indem über die Funkantenne 8 nach einem (koppelbereiten) Kommunikationspartner und/oder einer Steuereinheit gesucht wird. Der aktive Suchvorgang wird für die Bedienperson durch ein Blinken des Leuchtmittels 5 sichtbar. Sobald eine Verbindung aufgebaut wurde, erlischt das Blinklicht und die Bewegungs- und/oder Anwesenheitssensorvorrichtung 1 signalisiert vorteilhaft ihre Funktionsfähigkeit. Nachdem das Blinklicht erlischt ist, hat die Bedienperson die Möglichkeit, über ein dreimaliges, kurzes Betätigen des mechanischen Schalters 6, die Bewegungs- und/oder Anwesenheitserfassung zu deaktivieren, was durch dreimaliges, kurzes Aufleuchten des Leuchtmittels 5 signalisiert wird. Für eine anschließende Aktivierung ist ein drei Sekunden langes Betätigen des Schalters 6 nötig, das ebenfalls durch ein entsprechendes drei Sekunden langes Dauerlicht angezeigt wird. Ferner hat die Bedienperson durch ein einmaliges, kurzes Betätigen des Schalters 6 die Möglichkeit, das Leuchtmittel 5 manuell ein- und auszuschalten.

### Bezugszeichenliste

- 1: Bewegungs- und/oder Anwesenheitssensorvorrichtung
- 2: Gehäuse
- 3: Vorderseite
- 4: Sensorsignalwandler
- 5: Leuchtmittel
- 6: mechanischer Schalter
- 7: Logikmittel
- 8: Funkantenne
- 9: Kommunikationsmittel
- 10: Steckerabschnitt
- 11: Energieversorgungsmittel
- 12: Sensoraustrittsfläche
- 13: Erfassungsbereich
- 14: Lichtschalter
- 15: Haushalts- und/oder Industriesteckdose

## Patentansprüche

1. Bewegungs- und/oder Anwesenheitssensorvorrichtung (1) umfassend ein Gehäuse (2), eine Sensoraustrittsfläche (12), einen im Gehäuse (2) angeordneten Sensorsignalwandler (4) ausgebildet zum Senden und Empfangen von Sensorsignalen für eine Bewegungs- und/oder Anwesenheitserfassung in einem vor der Sensoraustrittsfläche (12) gebildeten Erfassungsbereich (13), signalleitend mit dem Sensorsignalwandler verbundene Logikmittel (7) zum Auswerten und Verarbeiten eines Ausgangssignals des Sensorsignalwandlers (4), elektrische Kommunikationsmittel (9), die mit den Logikmitteln (7) so signalleitend verbunden sind, dass Daten mit einem Kommunikationspartner und/oder einer Steuereinheit austauschbar sind sowie Betriebsspannungsversorgungsmittel (11) zur Bereitstellung einer Versorgungsspannung,
wobei an dem Gehäuse (2) ein Steckerabschnitt (10) ausgebildet zum Einstecken und Halten der Bewegungs- bzw. Anwesenheitssensorvorrichtung (1) in einer Haushalts- und/oder Industriesteckdose (15) vorgesehen ist, zum Versorgen der Betriebsspannungsversorgungsmittel (11) mit einer Netzspannung, wobei die Sensoraustrittsfläche (12) zum Durchtritt der Sensorsignale in einem eingesteckten Betriebszustand auf den Erfassungsbereich (13) ausgerichtet ist,
**dadurch gekennzeichnet,**
**dass** eine die Sensoraustrittsfläche (12) definierende Baugruppe des Gehäuses (2) derart ausgebildet ist, dass der Erfassungsbereich (13) im eingesteckten Betriebszustand von der Sensoraustrittsfläche (12) einen Azimutwinkel von 160 Grad umfasst und der dazu senkrecht verlaufende Elevationswinkel im Verhältnis zur Horizontalebene unsymmetrisch und kleiner als 160 Grad ist.

2. Bewegungs- und/oder Anwesenheitssensorvorrichtung nach Anspruch 1
**dadurch gekennzeichnet,**
**dass** die Kommunikationsmittel (9) derart ausgebildet sind, dass auf Basis von, bevorzugt standardisierten, Funkprotokollen Daten mit dem Kommunikationspartner bzw. der Steuereinheit austauschbar sind.

3. Bewegungs- und/oder Anwesenheitssensorvorrichtung nach einem der vorherigen Ansprüche,
**dadurch gekennzeichnet,**
**dass** die Bewegungs- bzw. Anwesenheitssensorvorrichtung (1) derart ausgebildet ist, dass ein von den Logikmitteln (7) ansteuerbares und von der Bewegungs- bzw. Anwesenheitssensorvorrichtung (1) umfasstes Leuchtmittel (5), bevorzugt gebildet aus mindestens einer Leuchtdiode (LED), im Gehäuse (2) so angeordnet ist, dass von dem Leuchtmittel (5) emittierte sichtbare Lichtstrahlen durch eine zur Sensoraustrittsfläche (12) benachbarte und/oder zu dieser parallel angeordnete Fläche austreten können.

4. Bewegungs- und/oder Anwesenheitssensorvorrichtung nach einem der vorherigen Ansprüche,
**dadurch gekennzeichnet,**
**dass** die Logikmittel (7) derart ausgebildet sind, dass ein mittels der Kommunikationsmittel (9) von dem Kommunikationspartnern empfangenes und/oder von der Steuereinheit ausgehendes Signal die Ansteuerung der Leuchtmittel (5) bewirkt.

5. Bewegungs- und/oder Anwesenheitssensorvorrichtung nach einem der vorherigen Ansprüche,
**dadurch gekennzeichnet,**
**dass** den Logikmitteln (7) signalleitend verbundene und von der Bewegungs- und/oder Anwesenheitssensorvorrichtung (1) umfasste Lichtererfassungsmittel am oder im Gehäuse (2), bevorzugt ausgebildet durch eine Photo-Diode, zugeordnet sind, zum Erfassen und Verarbeiten der Lichtverhältnisse in der Umgebung der Bewegungs- bzw. Anwesenheitssensorvorrichtung (1) und zum Beeinflussen einer Funktionalität der Logikmittel (7) als Reaktion auf das Erfassen bzw. Verarbeiten.

6. Bewegungs- und/oder Anwesenheitssensorvorrichtung nach einem der vorherigen Ansprüche,
**dadurch gekennzeichnet,**
**dass** den Logikmitteln (7) ein manuell betätigbarer und von der Bewegungs- und/oder Anwesenheitssensorvorrichtung (1) umfasster Schalter (6) oder Taster zugeordnet ist, der insbesondere der Sensoraustrittsfläche (12) benachbart und/oder in einer dazu parallelen Fläche vorgesehen ist und weiter bevorzugt eine flächige Tast- oder Schaltfläche anbietet.

7. Bewegungs- und/oder Anwesenheitssensorvorrichtung nach Anspruch 6,
**dadurch gekennzeichnet,**
**dass** ein Taster- oder Schaltersignal über die Kommunikationsmittel (9) zum Auswerten und/oder Steuern einer Anwendung an die/den Kommunikationspartner und/oder die Steuereinheit übertragbar ist und/oder dass durch das Taster- oder Schaltersignal die Bewegungs- und/oder Anwesenheitssensorvorrichtung (1) mittels der Logikmittel (7) steuerbar ist.

8. Bewegungs- und/oder Anwesenheitssensorvorrichtung nach einem der vorherigen Ansprüche,
**dadurch gekennzeichnet,**
**dass** das, bevorzugt als Kunststoffspritzguss gebildete, Gehäuse (2), eine insbesondere planare oder gebogene Außenfläche aufweist, von der eine Teilfläche, insbesondere optisch abgegrenzt, die Sensoraustrittsfläche (12) bildet und eine weitere, insbesondere optisch abgegrenzte, Teilfläche eine Abdeckung für dahinter angeordnete Leuchtmittel (5) bildet und/oder eine weitere, insbesondere optisch abgegrenzte, Teilfläche eine Betätigungsfläche für einen mechanischen Schalter (6) bildet, wobei bevorzugt das Gehäuse (2) der Bewegungs- und/oder Anwesenheitssensorvorrichtung (1) eine viereckige Kontur besitzt, die weiter bevorzugt einem benachbart angeordneten Lichtschalter (14) konturgleich ist.

9. System umfassend die Bewegungs- und/oder Anwesenheitssensorvorrichtung (1) nach einem der Ansprüche 1 bis 8 und einen durch die Bewegungs- und/oder Anwesenheitssensorvorrichtung (1), insbesondere als Reaktion auf eine erfasste Bewegung und/oder Anwesenheit ansteuerbaren elektrischen Verbraucher, insbesondere gebildet durch eine Leuchte, eine Rollladensteuerung, ein Heizungsventil oder eine Jalousie, sowie eine zur elektrischen Kontaktierung und mechanischen Halterung der Bewegungs- und/oder Anwesenheitssensorvorrichtung (1) ausgebildete Haushalts- und/oder Industriesteckdose (15).

10. System nach Anspruch 9,
**dadurch gekennzeichnet,**
**dass** ein der Bewegungs- und/oder Anwesenheitssensorvorrichtung (1) zugeordneter Kommunikationspartner und/oder die Steuereinheit selbst zur Ansteuerung eines partnerseitigen elektrischen Verbrauchers ausgebildet ist, wobei der partnerseitige Verbraucher durch die Bewegungs- und/oder Anwesenheitssensorvorrichtung (1) mittels des Kommunikationspartners und/oder der Steuereinheit ansteuerbar ist.

11. System nach Anspruch 9 oder 10,
**dadurch gekennzeichnet,**
**dass** der drahtlos angebundene Kommunikationspartner und/oder die Steuereinheit, bevorzugt mobil abfragbare, Daten erfasst, die bevorzugt über Displaymittel zur Darstellung von Betriebszustandsinformationen und/oder zur Eingabe von Steuerbefehlen verarbeitbar sind.

## Claims

1. Movement and/or presence sensor device (1) comprising a housing (2), a sensor outlet surface (12), a sensor signal converter (4) located in the housing (2) for transmitting and receiving sensor signals for movement and/or presence detection in a detection area (13) formed in front of the sensor outlet surface (12), logic means (7) having signal transferring connection to the sensor signal converter (7) for evaluation and processing of an output signal of the sensor signal converter (4), electrical communication means (9), which are so connected to the logic means (7) for signal transference so that data are interchangeable with a communication partner and/or a control unit, together with operating voltage supply means (11) for providing a supply voltage,
wherein a plug section (10) is provided on the housing (2) for plugging in a household and/or industrial plug socket (15) for supplying the operating voltage supply means (11) with a line voltage, maintaining the movement and/or presence sensor device (1), wherein die sensor outlet surface (12) is oriented for passage of the sensor signals in a plugged-in operating state to the detection area (13),
**characterised in that**
a subassembly of the housing (2) defining the sensor outlet surface (12) is configured so that the detection area (13) in the plugged-in operating state of the sensor outlet surface (12) includes an azimuth angle of 160 degrees
and
the elevation angle extending vertically is unsymmetrical in relation to the horizontal plane and is smaller than 160 degrees.

2. Movement and/or presence sensor device in accordance with claim 1 **characterised in that** the communication means (9) are adapted so that, on the basis of, preferably standardised, radio protocols, data can be interchangeable with the communication partner and/or the control unit.

3. Movement and/or presence sensor device in accordance with one of the preceding claims, **characterised in that** the movement and/or presence sensor device (1) is adapted so that an included light means (5) controllable by the logic means (7) and by the movement and/or presence sensor device (1), preferably in the form of at least one light emitting diode (LED), is so arranged in the housing (2) that visible light beams emitted by the light means (5) can emerge through a surface adjacent to the sensor outlet surface (12) and/or a surface located parallel to this.

4. Movement and/or presence sensor device in accordance with one of the preceding claims, **characterised in that** the logic means (7) are adapted so that a signal received via the communication means (9) from the communication partner and/or from the control unit control unit effects the actuation of the lighting means (5).

5. Movement and/or presence sensor device in accordance with one of the preceding claims, **characterised in that** the light detection means on or in the housing (2) having a signal transfer connection to the logic means (7) and comprising the movement and/or presence sensor device (1), preferably embodied by a photo-diode, are assigned to detecting and processing the light conditions in the surroundings of the movement and/or presence sensor device (1) and for effecting a functionality of the logic means (7) as reaction to the detection and/or processing.

6. Movement and/or presence sensor device in accordance with one of the preceding claims, **characterised in that** a manually operable switch (6) or button comprised by the movement and/or presence sensor device (1) is associated with the logic means (7) and is in particular located adjacent to the sensor outlet surface (12) and/or in a surface parallel to it and more preferably provides a flat button or switch surface.

7. Movement and/or presence sensor device in accordance with claim 6, **characterised in that** a button or switch signal can be transmitted via the communication means (9) for evaluation and/or control of an application at the communication partner(s) and/or the control unit and/or that the movement and/or presence sensor device (1) can be controlled by the button or switch signal by means of the logic means (7).

8. Movement and/or presence sensor device in accordance with one of the preceding claims, **characterised in that** the housing (2), preferably in the form of a plastic injection moulding, has in particular a planar or curved outer surface, of which a part of the surface forms the sensor outlet surface (12) and a further part of the surface, in particular visually defined, forms a cover for lighting means (5) located behind it and/or a further part of the surface, in particular visually defined, forms a mechanical switch (6), wherein preferably the housing (2) of the movement and/or presence sensor device (1) has a square contour, which further preferably has the same contour as an adjacent light switch (14).

9. System comprising the movement and/or presence sensor device (1) in accordance with one of the claims 1 to 8 and an electrical consumer controllable by the movement and/or presence sensor device (1), in particular as reaction to a detected movement and/or presence, in particular defined by a lamp, a roller blind controller, a heating valve or a shutter, as well as a household or industrial plug socket (15) designed for making electrical contact and mechanical retention of the movement and/or presence sensor device (1).

10. System in accordance with claim 9, **characterised in that** a communication partner assigned to the movement and/or presence sensor device (1) and/or the control unit itself is provided for controlling an associated electrical consumer, wherein the associated consumer is controlled by the movement and/or presence sensor device (1) by means of the communication partner and/or the control unit.

11. System in accordance with claim 9 or 10, **characterised in that** the wirelessly connected communication partner and/or the control unit captures data, preferably mobile searchable data, which are preferably processed by display means for representation of information on operating state and/or input of control commands.

## Revendications

1. Dispositif capteur de mouvement et/ou de présence (1) comprenant un boîtier (2), une surface de sortie de capteur (12), un convertisseur de signaux de capteur (4) disposé dans le capteur (2) et conçu pour envoyer et recevoir des signaux de capteur pour une détection de mouvement et/ou de présence dans une zone de détection (13) formée devant la surface de sortie de capteur (12), des moyens logiques (7) reliés au convertisseur de signaux de capteur avec une transmission de signaux pour analyser et traiter un signal de sortie du convertisseur de signaux de capteur (4), des moyens de communication électriques (9) qui sont reliés aux moyens logiques (7) avec une transmission de signaux de telle sorte que des données puissent être échangées avec un partenaire de communication et/ou une unité de commande, ainsi que des moyens d'alimentation en tension de service (11) pour fournir une tension d'alimentation,
dans lequel il est prévu sur le boîtier (2) une section formant fiche (10) pour brancher et retenir le dispositif capteur de mouvement ou de présence (1) dans une prise domestique et/ou industrielle (15), pour alimenter les moyens d'alimentation en tension de service (11) avec une tension de secteur,
dans lequel la surface de sortie de capteur (12) pour le passage des signaux de capteur est alignée, dans un état de service branché, sur la zone de détection (13),
**caractérisé en ce qu'**un sous-ensemble du boîtier (2) définissant la surface de sortie de capteur (12) est conçu de telle sorte que la zone de détection (13) englobe dans l'état de fonctionnement branché de la surface de sortie de capteur (12) un angle azimutal de 160 degrés et que l'angle d'élévation perpendiculaire à celui-ci soit asymétrique par rapport au plan horizontal et inférieur à 160 degrés.

2. Dispositif capteur de mouvement et/ou de présence selon la revendication 1, **caractérisé en ce que** les moyens de communication (9) sont conçus de telle sorte que sur la base de protocoles radio, de préférence standardisé, des données puissent être échangées avec le partenaire de communication ou l'unité de commande.

3. Dispositif capteur de mouvement et/ou de présence selon l'une des revendications précédentes, **caractérisé en ce que** le dispositif capteur de mouvement ou de présence (1) est conçu de telle sorte qu'un moyen d'éclairage (5) contenu par le dispositif capteur de mouvement ou de présence (1) et composé de préférence d'au moins une diode lumineuse (LED) soit disposé pour que des rayons lumineux visibles émis par le moyen d'éclairage (5) puissent sortir par une surface voisine de la surface de sortie de capteur (12) et/ou parallèle à celle-ci.

4. Dispositif capteur de mouvement et/ou de présence selon l'une des revendications précédentes, **caractérisé en ce que** les moyens logiques (7) sont conçus de telle sorte qu'un signal reçu par les partenaires de communication à l'aide des moyens de communication (9) et/ou sortant de l'unité de commande provoque le déclenchement des moyens d'éclairage (5).

5. Dispositif capteur de mouvement et/ou de présence selon l'une des revendications précédentes, **caractérisé en ce qu'**il est prévu sur ou dans le boîtier (2), associés aux moyens logiques (7), des moyens de détection de lumière reliés avec une transmission de signaux et contenus par le dispositif capteur de mouvement et/ou de présence (1), et formés de préférence par une photodiode, pour détecter et traiter les conditions lumineuses dans l'environnement du dispositif capteur de mouvement et/ou de présence (1) et pour influencer une fonctionnalité des moyens logiques (7) en réaction à la détection ou au traitement.

6. Dispositif capteur de mouvement et/ou de présence selon l'une des revendications précédentes, **caractérisé en ce qu'**il est prévu un commutateur (6) ou bouton-poussoir à actionnement manuel associé aux moyens logiques (7) et contenu par le dispositif capteur de mouvement et/ou de présence (1), qui est prévu en particulier près de la surface de sortie de capteur (12) et/ou dans une surface parallèle à celle-ci, et offre également de préférence une surface tactile ou de commutation plane.

7. Dispositif capteur de mouvement et/ou de présence selon la revendication 6, **caractérisé en ce qu'**un signal de bouton-poussoir ou de commutateur est apte à être transmis par les moyens de commutation (9), pour l'analyse et/ou la commande d'une application, au(x) partenaire(s) de communication et/ou à l'unité de commande, et/ou **en ce que** grâce au signal de bouton-poussoir ou de commutateur le dispositif capteur de mouvement et/ou de présence (1) est apte à être commandé à l'aide des moyens logiques (7).

8. Dispositif capteur de mouvement et/ou de présence selon l'une des revendications précédentes, **caractérisé en ce que** le boîtier (2), formé de préférence comme une pièce moulée en matière plastique, présente une surface extérieure en particulier plane ou courbe dont une partie, en particulier délimitée optiquement, forme la surface de sortie de capteur (12) et une autre partie, en particulier délimitée optiquement, forme un recouvrement pour des moyens d'éclairage (5) disposés derrière, et/ou une autre partie, délimitée en particulier optiquement, forme une surface d'actionnement pour un commutateur mécanique (6), dans lequel de préférence le boîtier (2) du dispositif capteur de mouvement et/ou de présence (1) a un contour quadrangulaire qui est également de préférence identique au contour d'un interrupteur de lampe (14) voisin.

9. Système comprenant le dispositif capteur de mouvement et/ou de présence (1) selon l'une des revendications 1 à 8 et un consommateur électrique apte à être déclenché par le dispositif capteur de mouvement et/ou de présence (1), en particulier en réaction à un mouvement et/ou une présence détectés, formé en particulier par une lampe, une commande de volet roulant, une soupape de chauffage ou un store vénitien, et une prise domestique et/ou industrielle (15) conçue pour le contact électrique et la retenue mécanique du dispositif capteur de mouvement et/ou de présence (1).

10. Système selon la revendication 9, **caractérisé en ce qu'**un partenaire de communication associé au dispositif capteur de mouvement et/ou de présence (1) et/ou l'unité de commande elle-même sont conçus pour déclencher un consommateur électrique côté partenaire, dans lequel le consommateur côté partenaire est apte à être déclenché par le dispositif capteur de mouvement et/ou de présence (1) à l'aide du partenaire de communication et/ou de l'unité de commande.

11. Système selon la revendication 9 ou 10, **caractérisé en ce que** le partenaire de communication connecté sans fil et/ou l'unité de commande détectent des données de préférence consultables de manière mobile, qui sont conçues de préférence pour être traitées par des moyens d'affichage pour visualiser des informations d'état de service et/ou pour entrer des instructions de commande.
